# EUROPEAN PATENT APPLICATION

(11) **EP 4 246 290 A1**
(43) Date of publication of application: **20.09.2023**
(21) Application number: 23706274.0
(22) Date of filing: 07.02.2023
(51) Int. Cl.: G06F 3/01, G06F 3/16, G06F 1/16, G06F 3/04847, G06F 3/04817

(54) **ELECTRONIC DEVICE AND METHOD FOR PROVIDING HAPTIC FUNCTION**

(30) Priority: 07.02.2022 KR 20220015604; 08.02.2022 KR 20220016523
(71) Applicant: Samsung Electronics Co., Ltd., Suwon-si, Gyeonggi-do (KR)
(72) Inventor: JEONG, Jeyeong, Suwon-si, Gyeonggi-do 16677 (KR); KWON, Jeongwook, Suwon-si, Gyeonggi-do 16677 (KR); KIM, Sangheon, Suwon-si, Gyeonggi-do 16677 (KR); KIM, Taekyun, Suwon-si, Gyeonggi-do 16677 (KR); PARK, Taeuk, Suwon-si, Gyeonggi-do 16677 (KR); SHIM, Sangwon, Suwon-si, Gyeonggi-do 16677 (KR); LIM, Yeunwook, Suwon-si, Gyeonggi-do 16677 (KR)
(74) Representative: HGF
(86) International application number: PCT/KR2023/001732
(87) International publication number: WO 2023/149782

(57) **Abstract**

An electronic device according to an embodiment may include a display, a speaker, a vibrator, and at least one processor functionally connected to the display, the speaker, and the vibrator, wherein the at least one processor is configured to obtain an output event of a multimedia content including audio data and first vibration data corresponding to the audio data, configure a first vibration intensity, based on a vibration intensity of the output event, configured by a user, obtain state information on the electronic device in response to the output event, generate a second vibration intensity, based on the state information and the output event, and while outputting the audio data through the speaker, output, through the vibrator, second vibration data obtained by correcting the vibration intensity of the first vibration data, based on the first vibration intensity and the second vibration intensity. In addition, various embodiments understood through the specification are possible.

## Description

### [Technical Field]

Various embodiments disclosed herein relate to an electronic device and method for providing a haptic function of delivering various stimuli to a user according to a media content.

### [Background Art]

With technology development, the range of scenarios in which electronic devices (e.g., mobile terminals) are used is increasing, for example, electronic devices are utilized not only for simple phone calls or schedule management, but also for games, remote control using short-range communication, or image taking by a built-in digital camera.

In addition, as users want specific and realistic information, Haptic technology for delivering tactile information has been developed to satisfy the users' needs. Therefore, mobile terminals may provide a function of providing various vibration patterns through a Haptic function and making a vibration bell by using the various vibration patterns.

The Haptic technology is a term generally referring to computer tactile technology, and the Haptic technology includes a force feedback allowing a user to feel a force and a sense of motion, and a tactile feedback allowing a user to feel an object. The Haptic technology is being widely applied to various fields, including a game simulator and a medical simulator.

### [Disclosure of Invention]

### [Technical Problem]

Haptic technology may include responding to a user's touch input or output of a multimedia content with vibration and a sound source. According to the related art, there is a problem that electronic device cannot minutely control vibration synchronized with a sound source according to internal and/or external conditions of the electronic device. For example, conventional electronic devices have failed to reflect location information of the electronic device, state information of the electronic device (e.g., whether a case is attached or detached, folding state), or the user's intention when vibration is output.

Embodiments of the disclosure are for determining a vibration intensity according to an output event including a sound source and vibration synchronized with the sound source by using at least one of the type of the output event, the intensity of vibration configured by a user of an electronic device, and various state information related to the electronic device and for providing haptic feedback, based on the determined vibration intensity. In some examples, the output event is an output request of media content including a sound source with which the vibration is synchronized.

Technical problems addressed by the document are not limited to the above-described technical problems, and any other technical problems not mentioned herein will be clearly understood from the following description by those skilled in the art to which the disclosure pertains.

### [Solution to Problem]

According to various embodiments, an electronic device may include a display, a speaker, a vibrator, and at least one processor functionally connected to the display, the speaker, and the vibrator. The at least one processor may be configured to obtain an output event of a multimedia content including audio data and first vibration data corresponding to the audio data. In addition, the at least one processor may be configured to configure a first vibration intensity, based on a vibration intensity of the output event, configured by a user. Moreover, the at least one processor may be configured to obtain state information on the electronic device in response to the output event. Further, the at least one processor may be configured to generate a second vibration intensity, based on the state information and the output event and while outputting the audio data through the speaker, output, through the vibrator, second vibration data obtained by correcting the vibration intensity of the first vibration data, based on the first vibration intensity and the second vibration intensity.

According to various embodiments, a method for operating an electronic device including a speaker and a vibrator may include: obtaining an output event of a multimedia content including audio data and first vibration data corresponding to the audio data; obtaining state information on the electronic device in response to the output event; configuring a first vibration intensity, based on a vibration intensity of the output event, configured by a user; generating a second vibration intensity, based on the state information and the output event; and while the audio data is output through the speaker, outputting, through the vibrator, second vibration data obtained by correcting the vibration intensity of the first vibration data, based on the first vibration intensity and the second vibration intensity.

According to various embodiments, an electronic may include a memory, a speaker, a vibrator, and at least one processor functionally connected to the memory, the speaker, and the vibrator. The at least one processor may be configured to store, in the memory, vibration intensity information including at least one vibration intensity of each output event of at least one multimedia content. In addition, the at least one processor may be configured to obtain an output event of a multimedia content including audio data and first vibration data corresponding to the audio data. Moreover, the at least one processor may be configured to determine, as a first vibration intensity, a vibration intensity corresponding to the output event among at least one vibration intensity included in the vibration intensity information. Further, the at least one processor may be configured to obtain state information on the electronic device in response to the output event. In addition, the at least one processor may be configured to generate a second vibration intensity, based on the state information and the output event and while outputting the audio data through the speaker, output, through the vibrator, second vibration data obtained by correcting the vibration intensity of the first vibration data, based on the first vibration intensity and the second vibration intensity.

### [Advantageous Effects of Invention]

According to various embodiments disclosed herein, an electronic device may provide a haptic feedback including a sound source and vibration in response to an output event of a multimedia content including a sound source and vibration synchronized with the sound source.

In addition, according to various embodiments, the electronic device may output vibration based on a vibration intensity configured by a user of the electronic device together with a sound source in response to the output event of the multimedia content.

Moreover, according to various embodiments, the electronic device may output vibration based on state information of the electronic device together with a sound source in response to the output event of the multimedia content.

Further, according to various embodiments, the electronic device may adjust a vibration intensity, based on a vibration intensity configured by the user of the electronic device, state information of the electronic device, and/or the type of the output event, in response to the output event of the multimedia content.

Although output events relating to multimedia content are referred to here and throughout this document, the output events may take the form of any event at an electronic device with which vibration may be output in conjunction with, such as notifications, feedback, and single media output for example.

In addition, various effects that are identified directly or indirectly through this document may be provided.

### [Best Mode for Carrying out the Invention]

FIG. 1 is a block diagram of an electronic device according to an embodiment;
FIG. 2 illustrates a hierarchical configuration for outputting a multimedia content according to an embodiment;
FIG. 3 is a flowchart showing an operation of outputting a multimedia content according to an embodiment;
FIG. 4 is a flowchart illustrating a method of outputting a multimedia content by using vibration intensity information according to an embodiment;
FIG. 5 is a flowchart illustrating a method for obtaining an input for configurating a vibration intensity according to an embodiment;
FIG. 6 illustrates a user interface (UI) related to configurating a vibration intensity output on a display of an electronic device according to an embodiment;
FIG. 7 is a flowchart illustrating determining a second vibration intensity, based on state information according to an embodiment;
FIG. 8 illustrates determining a vibration intensity according to a vibration output direction and a mounting direction of an electronic device according to an embodiment;
FIG. 9 illustrates determining a vibration intensity according to the type of an accessory connected to an electronic device according to an embodiment; and
FIG. 10 illustrates determining a second vibration intensity, based on a touch input to at least one icon output on a display of an electronic device according to an embodiment.
FIG. 11 is a block diagram illustrating an electronic device within a network environment according to various embodiments.

In connection with description of drawings, the same or similar reference numerals may be used for the same or similar elements.

### [Mode for Invention]

Hereinafter, various embodiments of the present disclosure will be described with reference to the accompanying drawings. However, this does not limit the disclosure to specific embodiments, and it should be understood that various modifications, equivalents, and/or alternatives of embodiments of the disclosure are included.

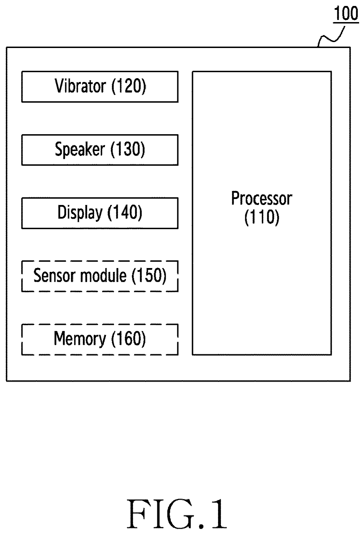

FIG. 1 is a block diagram of an electronic device according to an embodiment.

Referring to FIG. 1, an electronic device 100 may include at least one processor 110, a vibrator 120, a speaker 130, a display 140, a sensor module 150, and/or a memory 160. The components listed above may be operatively or electrically connected to each other. Some of the components of the electronic device 100 shown in FIG. 1 may be modified, deleted, or added as an example.

According to an embodiment, the processor 110 may be electrically or operatively connected to the vibrator 120, the speaker 130, the display 140, the sensor module 150, and/or the memory 160. According to an embodiment, the processor 110 may execute calculations or data processing related to control and/or communication of at least one component of the electronic device 100 by using instructions stored in the memory 160. According to an embodiment, the processor 110 may include at least one of a central processing unit (CPU), a graphics processing unit (GPU), a micro controller unit (MCU), a sensor hub, a supplementary processor, a communication processor, an application processor, an application specific integrated circuit (ASIC), field programmable gate arrays (FPGA), or a neural processing unit (NPU), and may have a plurality of cores.

According to an embodiment, the electronic device 100 may include a vibrator 120. The vibrator 120 may convert electrical signals into mechanical vibrations and generate vibration or haptic effects. According to various embodiments of the disclosure, the processor 110 may apply data related to vibration generation to a configuration (e.g., a vibrator controller (not shown)) of an electronic device for controlling the vibrator 120, and the vibrator controller may output vibration data received from the processor 110 to the vibrator 120.

According to an embodiment, the processor 110 may transmit vibration data related to vibration generation and a vibration intensity for outputting vibration to the vibrator 120. The vibrator 120 may output vibration, based on the vibration data and vibration intensity received from the processor 110.

In various embodiments, the vibrator 120 is given as an example, but the various embodiments are not limited thereto. For example, in various embodiments, the vibrator 120 may be implemented by a vibration generating device (or module) that generates vibration like the vibrator 120. For example, the vibration generating device may include a vibrator 120, a motor (e.g., a vibration motor), an actuator, or a haptic generating device. In various embodiments, an operation related to producing and generating vibration according to various embodiments described below may be performed using one or more vibration generating devices.

According to an embodiment, the electronic device 100 may include a speaker 130. The speaker 130 according to an embodiment may output audio data received through the processor 110 or stored in the memory 160. For example, the processor 110 may output audio data through the speaker 130 in response to obtaining an output event of a multimedia content including the audio data.

According to an embodiment, the display 140 may display various contents (e.g., text, image, video, icon, and/or symbol). According to an embodiment, the display 140 may include a liquid crystal display (LCD), a light emitting diode (LED) display, or an organic light emitting diode (OLED) display.

According to an embodiment, the display 140 may include a touch sensor configured to detect a touch or a pressure sensor configured to measure the intensity of force generated by the touch.

According to an embodiment, the processor 110 may control the display 140 such that the display 140 displays a user interface for configuring the size of audio data and/or vibration data output through the electronic device 100. For example, the processor 110 may control the display 140 such that the display 140 displays a user interface for configuring an intensity of vibration according to the type of output event of vibration data.

According to an embodiment, the electronic device 100 may determine the intensity of the vibration by using the touch sensor and the pressure sensor included in the display 140. For example, the processor 110 may obtain a touch input to a user interface for configuring the intensity of vibration, and determine the intensity of vibration, based on the pressure intensity or duration of the touch input.

According to an embodiment, the electronic device 100 may include at least one sensor module 150. The sensor module 150 may measure a physical quantity or detect an operating state of the electronic device 100 and convert the measured or sensed information into an electrical signal. For example, the sensor module 150 may include at least one of a gesture sensor, a gyro sensor, a barometer sensor, a magnetic sensor, an acceleration sensor, a grip sensor, a proximity sensor, a color sensor (e.g., red, green, blue (RGB) sensor), a biological sensor, a temperature-humidity sensor, an illuminance sensor, or an ultra violet (UV) sensor.

According to an embodiment, the sensor module 150 may additionally or alternatively include an e-nose sensor, an electromyography (EMG) sensor, and an electroencephalogram (EEG) sensor, an electrocardiogram (ECG) sensor, an infrared (IR) sensor, an iris scan sensor, and/or a fingerprint sensor. The sensor module 150 may further include a control circuit for controlling one or more sensors included therein. In an embodiment, the electronic device 100 may further include a microprocessor unit (MPU)) or a processor (e.g., a low-power processor, a micro controller unit (MCU)) configured to control the sensor module 150, separately or as part of the processor 110. Therefore, the processor while being in a sleep state may control the sensor module 150.

According to an embodiment, the processor 110 may obtain various state information related to the electronic device 100 through the sensor module 150. According to an embodiment, the state information may include location information of the electronic device 100, accessory information (e.g., a Bluetooth earphone, a case) connected to the electronic device 100, folding state information of the electronic device 100, and/or information related to whether the electronic device 100 is worn on a part of the user's body. According to various embodiments, the state information may include various information that may be obtained through the sensor module 150 without being limited to the above-listed examples.

According to an embodiment, the electronic device 100 may include a memory 160. The memory 160 may store instructions that cause the processor 110 to process data or control components of the electronic device 100 to perform operations of the electronic device 100 when executed. According to an embodiment, the memory 160 may store at least one application capable of performing various functions. For example, the memory 160 may store an application that performs a function of outputting multimedia contents including audio data and vibration data corresponding to the audio data to a user. For example, the memory 160 may store an application that performs a function of providing the multimedia content in response to an output event.

According to an embodiment, the memory 160 may store various information related to a user of the electronic device 100, obtained through the processor 110. For example, the memory 160 may store state information of the electronic device 100. For another example, the memory 160 may store vibration intensity information acquired through the processor 110. For example, the memory 160 may store vibration intensity information including at least one vibration intensity of each or one or more output events, which may or may not be related to at least one multimedia content. According to an embodiment, the processor 110 may obtain an input for configuring at least one vibration intensity of each output event of at least one multimedia content from a user of the electronic device 100. The memory 160 may store the at least one vibration intensity obtained through the processor 110.

According to an embodiment, the processor 110 may obtain an output event of a multimedia content including audio data and first vibration data corresponding to the audio data. For example, the processor 110 may obtain an output event of the multimedia content, based on at least one application being executed among a plurality of applications stored in the memory 160. For example, the processor 110 may obtain an output event of the multimedia content generated through a phone application according to a request for a call connection received from a user of another electronic device.

According to an embodiment, when an output event of a multimedia content including vibration data corresponding to audio data is obtained, the processor 110 may synchronize audio data and vibration data so that the audio data and the vibration data may be simultaneously output.

According to an embodiment, the processor 110 may configure the first vibration intensity, based on a vibration intensity for the output event configured by the user. For example, the processor 110 may identify the vibration intensity configured by the user of the electronic device 100 in response to the output event when the output event occurs or before the output event occurs. For example, the processor 110 may identify a vibration intensity corresponding to the output event or a type of output event, based on vibration intensity information stored in the memory 160. According to an embodiment, the processor 110 may configure the identified vibration intensity as the first vibration intensity. The vibration intensity information may be pre-configured or default as well as user-configured.

According to an embodiment, the processor 110 may obtain state information on the electronic device 100 in response to the output event. For example, the processor 110 may obtain state information, based on various information acquired through the sensor module 150.

According to an embodiment, the processor 110 may generate a second vibration intensity, based on the state information and the output event. For example, the processor 110 may generate a second vibration intensity for adjusting an intensity of vibration data associated with or included in a multimedia content or other output event, based on the type and state information of the output event.

According to an embodiment, the processor 110 may output audio data through the speaker 130. In addition, while the processor 110 is outputting audio data through the speaker 130, the processor 110 may output, through the vibrator 120, second vibration data obtained by correcting or adjusting the vibration intensity of the first vibration data, based on the first vibration intensity and the second vibration intensity. According to an embodiment, the processor 110 may synchronize audio data and vibration data so that the audio data and the vibration data may be generated simultaneously. In addition, the processor 110 may simultaneously output the second vibration data obtained by correcting the vibration intensity, based on the first vibration intensity and the second vibration intensity along with the audio data.

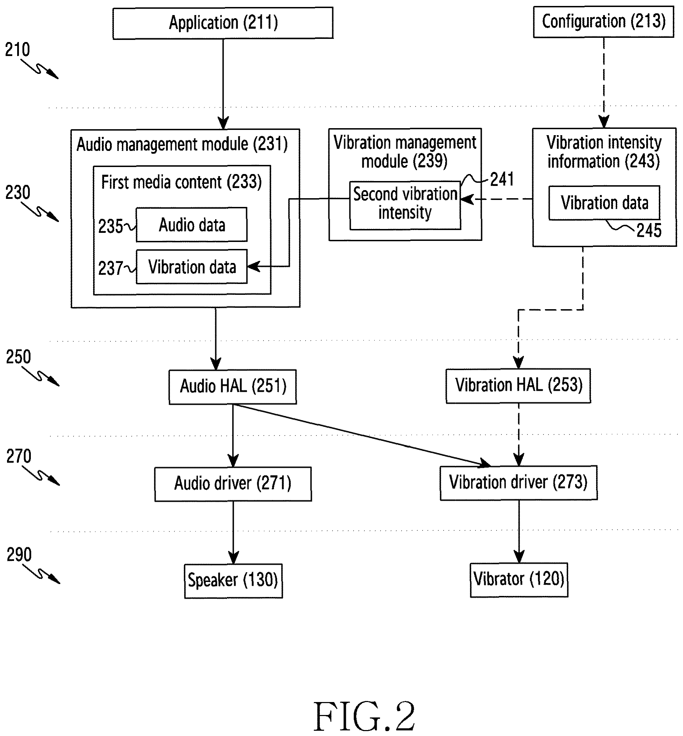

FIG. 2 illustrates a hierarchical configuration for outputting a multimedia content according to an embodiment. However, it should be appreciated that vibration data may also be output and its intensity adjusted based on state information on an electronic device when the vibration data is related to any form of output event, rather than just output events that include some form of media content.

According to an embodiment, the electronic device 100 may include an application area 210, a framework area 230, a hardware abstraction layer (HAL) area 250, a kernel area 270, and/or a device area 290. According to an embodiment, operations of the application area 210, the framework area 230, the hardware abstraction layer area 250, the kernel area 270, and/or the device area 290 may be performed by the processor 110.

According to an embodiment, the application area 210 may store various applications 211 in the memory 160. For example, the application 211 may include home, dialer, SMS/MMS, instant message (IM), alarm, voice dial, email, calendar, and/or media player. According to various embodiments, the application 211 may include an application for performing an operation of generating and providing related vibrations, based on musical elements. For example, the application 211 may include an application for performing an operation of providing an output of a multimedia content including audio data and first vibration data corresponding to the audio data.

According to an embodiment, the application area 210 may include a configuration 213 that is an application that controls configuration related to various functions provided by the application 211. For example, the configuration 213 may provide a function for configuring basic values (e.g., an intensity of vibration) of various functions provided to a user through the electronic device 100. According to an embodiment, the processor 110 may execute the configuration 213 to perform various configurations related to the application 211.

According to an embodiment, the processor 110 may configure the vibration intensity according to the type of output event of a multimedia content provided through the application 211. For example, the processor 110 may configure the vibration intensity of the multimedia content, based on a user input obtained through the configuration 213. For example, the processor 110 may obtain a user input for configuring at least one vibration intensity of each output event of at least one multimedia content through the configuration 213. According to various embodiments, the user input may include a touch input through the display 140, an input through a physical key, and/or an input through voice.

According to an embodiment, the framework area 230 may include a module for providing various functions of the electronic device 100. For example, the framework area 230 may provide a function commonly required by the application 211 and the configuration 213, or may provide various functions allowing the application 211 and the configuration 213 to use limited system resources within the electronic device 100.

According to an embodiment, the framework area 230 may include an audio management module 231, a vibration management module 239, and/or vibration intensity information 243.

According to an embodiment, the vibration intensity information 243 may include at least one vibration intensity obtained by the processor 110 from a user through the configuration 213. For example, the processor 110 may store at least one vibration intensity of each of the at least one multimedia content acquired through the configuration 213 in the memory 160 as vibration intensity information 243.

According to an embodiment, the processor 110 may obtain an output event of a multimedia content including audio data and first vibration data corresponding to the audio data from the application 211. The processor 110 may determine the first vibration intensity by using the vibration intensity information 243. For example, the processor 110 may determine, as the first vibration intensity, the vibration intensity corresponding to the output event among at least one vibration intensity of each of the at least one multimedia content included in the vibration intensity information 243.

According to another embodiment, the processor 110 may obtain a user input related to the vibration intensity of the multimedia content through the configuration 213 in response to the output event of the multimedia content, and may determine a first vibration intensity, based on a user input.

According to an embodiment, the processor 110 may transmit the configured first vibration intensity to the vibration HAL 253 of the hardware abstraction layer area 250 and transmit the configured first vibration intensity to a vibration driver 273 of the kernel area 270 to transmit the same to the vibrator of the device area 290.

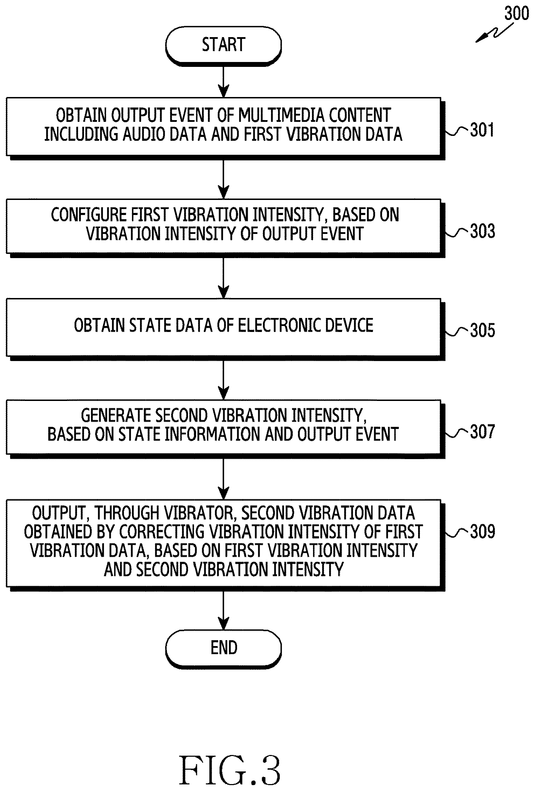

According to an embodiment, in response to an output event of a multimedia content including audio data and first vibration data corresponding to the audio data, the processor 110 may generate (determine) the second vibration intensity 241, based on the output event and/or state information. For example, the processor 110 may generate the second vibration intensity 241 through the vibration management module 239. Contents of generating the second vibration intensity, based on various state information and output events according to various embodiments will be described later with reference to FIGS. 3 to 10.

According to an embodiment, the audio management module 231 may obtain a multimedia content from the application 211. For example, the processor 110 may obtain audio data and vibration data corresponding to the audio data through the audio management module 231 in response to an output event of the multimedia content obtained from the application 211. According to an embodiment, the processor 110 may obtain audio data and 235 and vibration data 237 (e.g., the first vibration data described with reference to FIG. 1) through the audio management module 231 in response to the output event of a first multimedia content 233.

According to an embodiment, the processor 110 may transmit the second vibration intensity 241 generated through the vibration management module 239 to the vibration HAL 253 of the hardware abstraction layer area 250 and transmit the second vibration intensity 241 to the vibration driver 273 of the kernel area 270 to transmit the same to the vibrator 120 of the device area 290. In addition, the processor 110 may transmit the vibration data 237 to the vibrator 120 through a path similar to that of the second vibration intensity 241. In an embodiment, the vibrator 120 may output vibration data (e.g., the second vibration data of FIG. 1) obtained by correcting/adjusting the vibration intensity of the vibration data 237, based on the first vibration intensity 245 and the second vibration intensity 241.

According to an embodiment, the processor 110 may map the second vibration intensity 241 generated through the vibration management module 239 with vibration data 237 included in the audio management module 231. For example, the processor 110 may generate mapping data that is vibration data obtained by mapping the second vibration intensity 241 and the vibration data 237. According to an embodiment, the processor 110 may transmit the mapping data and the second vibration intensity 241 to the vibration HAL 253 of the hardware abstraction layer area 250 and transmit the mapping data and the second vibration intensity 241 to the vibration driver 273 of the kernel area 270 to transmit the same to the vibrator 120 of the device area 290. In an embodiment, the vibrator 120 may output vibration data obtained by correcting the vibration intensity of the mapping data, based on the first vibration intensity 245.

According to an embodiment, the processor 110 may transmit the audio data 235 of the first multimedia content 233 included in the audio management module 231 to the speaker 130 through a similar path. For example, the processor 110 may transmit the audio data 235 to the audio HAL 251 of the hardware abstraction layer area 250 and transmit the audio data 235 to the audio driver 271 of the kernel area 270 to transmit the same to the speaker 130 of the device area 290.

According to an embodiment, the processor 110 may output the audio data 235 through the speaker 130. In addition, the processor 110 may output the vibration data 237 synchronized with the audio data 235 through the vibrator 120 while the audio data 235 is output through the speaker 130. According to an embodiment, the vibrator 120 may output, through the vibrator 120, vibration data obtained by correcting the vibration data 237 according to the first vibration intensity 245 and the second vibration intensity 241. For example, the vibrator 120 may output vibration data (e.g., the second vibration data described with reference to FIG. 1) obtained by adjusting the intensity of vibration of the vibration data 237, based on the received first vibration intensity 245 and the second vibration intensity 241.

The vibrator 120 of the electronic device 100 according to an embodiment may output vibration in consideration of both the vibration intensity transmitted through the vibration HAL 253 and the vibration driver 273, based on the vibration intensity information 243, and the vibration intensity transmitted through the audio HAL 251 and the vibration driver 273 from the audio management module 231, thereby variably outputting vibration of various sizes.

FIG. 3 is a flowchart 300 illustrating an operation of outputting a multimedia content according to an embodiment. Although multimedia content is referred to, the output event may take any form in which an output is provided to a user, for example, in some instances there may not be any audio data associated with the output event.

Referring to FIG. 3, the processor 110 may obtain an output event of a multimedia content including audio data and first vibration data in operation 301. For example, the processor 110 may obtain an output event of a multimedia content including audio data and first vibration data corresponding to the audio data. According to an embodiment, the processor 110 may obtain the output event from at least one application stored in the memory 160.

According to an embodiment, in operation 303, the processor 110 may configure the first vibration intensity, based on the vibration intensity of the output event. For example, the processor 110 may obtain an input for configuring a vibration intensity of the output event from a user of the electronic device 100 and configure the first vibration intensity, based on the input. According to an embodiment, the time point at which the input is acquired may be before the occurrence of an output event or a time point at which an output event occurs.

According to an embodiment, the processor 110 may obtain state data of the electronic device 100 in operation 305. For example, the processor 110 may obtain various state information related to the electronic device 100 through the sensor module 150. According to an embodiment, the processor 110 may request state data from the sensor module 150 at the time of occurrence of an output event.

According to an embodiment, in operation 307, the processor 110 may generate the second vibration intensity, based on the state information and the output event. For example, the processor 110 may generate the second vibration intensity, based on state information and the type of output event. According to an embodiment, the processor 110 may generate the second vibration intensity by correcting the first vibration intensity, based on state information. According to another embodiment, the processor 110 may generate the second vibration intensity by configuring the vibration intensity according to the type of output event and correcting the configured vibration intensity, based on state information. According to various embodiments, the processor 110 may generate the second vibration intensity through various methods by using at least state information.

According to an embodiment, in operation 309, the processor 110 may output, through the vibrator 120, second vibration data obtained by correcting the vibration intensity of the first vibration data, based on the first vibration intensity and the second vibration intensity. For example, the processor 110 may output, through the vibrator 120, the second vibration data obtained by correcting the vibration intensity of the first vibration data, based on the first vibration intensity and the second vibration intensity while outputting audio data through the speaker 130.

According to an embodiment, the processor 110 may transmit the first vibration intensity and the second vibration intensity to the vibrator 120 in response to an output event of a multimedia content. According to an embodiment, the vibrator 120 may output the second vibration data obtained by correcting the vibration intensity of the first vibration data, based on the received first vibration intensity and the second vibration intensity.

According to an embodiment, the processor 110 may control the speaker 130 and the vibrator 120 such that audio data and vibration data corresponding to the audio data may be simultaneously output according to a request for outputting multimedia contents including the audio data and the first vibration data corresponding to the audio data. For example, the processor 110 may generate first vibration data synchronized with the audio data. In addition, the first vibration data, the first vibration intensity, and the second vibration intensity may be transmitted to the vibrator 120. Further, the processor 110 may transmit the audio data to the speaker 130. According to an embodiment, the vibrator 120 may output the second vibration data obtained by correcting the synchronized first vibration data, based on the first vibration intensity and the second vibration intensity, and the speaker 130 may output the audio data. Accordingly, the processor 110 may control the vibrator 120 such that second vibration data is output while the audio data is output through the speaker 130.

According to an embodiment, the processor 110 may omit some of the above-described operations for outputting a multimedia content or may perform additional other operations.

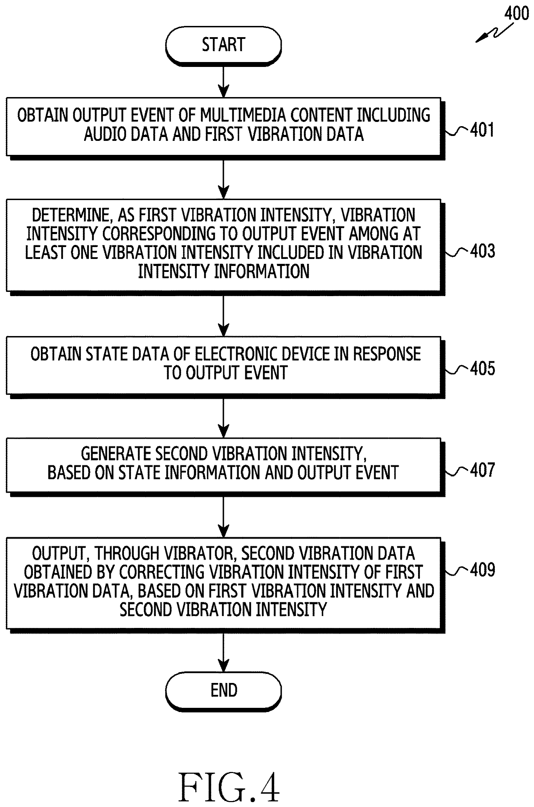

FIG. 4 is a flowchart 400 illustrating a method for outputting a multimedia content by using vibration intensity information according to an embodiment. As for Figure 3, although multimedia content is referred to, the output event may take any form in which an output is provided to a user, for example, in some instances there may not be any audio data associated with the output event.

Referring to FIG. 4, the processor 110 may obtain an output event of a multimedia content including audio data and first vibration data in operation 401. According to an embodiment, the processor 110 may obtain an output event by performing an operation similar to operation 301. Descriptions similar to or identical to those described with reference to FIG. 3 may be omitted.

According to an embodiment, in operation 403, the processor 110 may determine, as the first vibration intensity, the vibration intensity corresponding to the output event among at least one vibration intensity included in the vibration intensity information. For example, the processor 110 may obtain an input for configuring at least one vibration intensity of each output event of at least one multimedia content from a user of the electronic device 100. According to an embodiment, the processor 110 may store at least one obtained vibration intensity in the memory 160 as vibration intensity information. According to various embodiments, the vibration intensity information may include not only vibration intensity based on an input for configuring at least one vibration intensity acquired from a user but also vibration intensity according to an initial configuration of the electronic device 100 of each output event of at least one multimedia content.

According to an embodiment, the processor 110 may configure, as the first vibration intensity, the vibration intensity corresponding to the output event obtained in operation 401, among at least one vibration intensity included in the vibration intensity information stored in the memory 160.

According to an embodiment, the processor 110 may obtain state data of the electronic device 100 in operation 405. According to an embodiment, the processor 110 may acquire state data by performing an operation similar to operation 305. According to an embodiment, the processor 110 may request state data from the sensor module 150 at a time point of occurrence of an output event.

For example, the processor 110 may obtain various state information related to the electronic device 100 through the sensor module 150.

According to an embodiment, the processor 110 may generate the second vibration intensity, based on the state information and the output event in operation 407. According to an embodiment, the processor 110 may generate the second vibration intensity by performing an operation similar to operation 307. For example, the processor 110 may generate the second vibration intensity, based on the state information and the type of the output event.

According to an embodiment, in operation 409, the processor 110 may output, through the vibrator 120, the second vibration data obtained by correcting the vibration intensity of the first vibration data, based on the first vibration intensity and the second vibration intensity. According to an embodiment, the processor 110 may output the second vibration data by performing an operation similar to operation 309. For example, the processor 110 may control the speaker 130 and the vibrator 120 such that audio data and vibration data corresponding to the audio data may be simultaneously output according to a request for outputting multimedia contents including the audio data and the first vibration data.

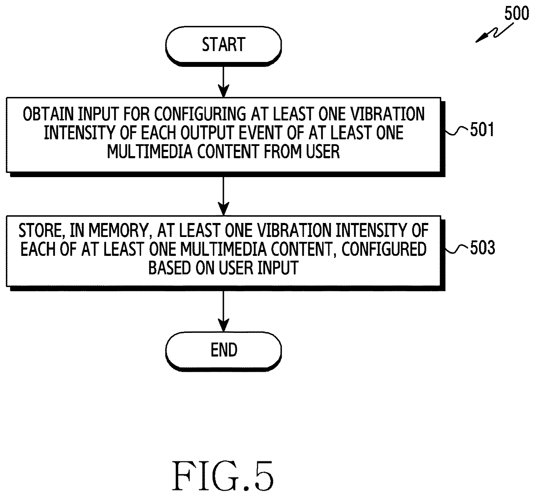

FIG. 5 is a flowchart 500 illustrating a method for obtaining an input for configuring a vibration intensity according to an embodiment.

Referring to FIG. 5, the processor 110 may obtain an input for configuring at least one vibration intensity of each output event of at least one multimedia content from a user in operation 501. For example, the processor 110 may display a user interface related to configuring a vibration intensity of each of at least one multimedia content through the display 140. In addition, the processor 110 may obtain a user input to the user interface. Although multimedia content is primarily considered, other forms of output event that have corresponding vibration data may be considered.

According to an embodiment, the user input to the user interface may include a touch input through the display 140, an input using a physical key included in the electronic device 100, and/or an input through voice.

According to an embodiment, in operation 503, the processor 110 may store, in the memory 160, at least one vibration intensity of each of the at least one multimedia content, configured based on the user input. For example, the processor 110 may store the at least one vibration intensity in the memory 160 as vibration intensity information.

According to an embodiment, the processor 110 may omit some of the above-described operations of obtaining an input for configuring the vibration intensity, or may perform additional other operations.

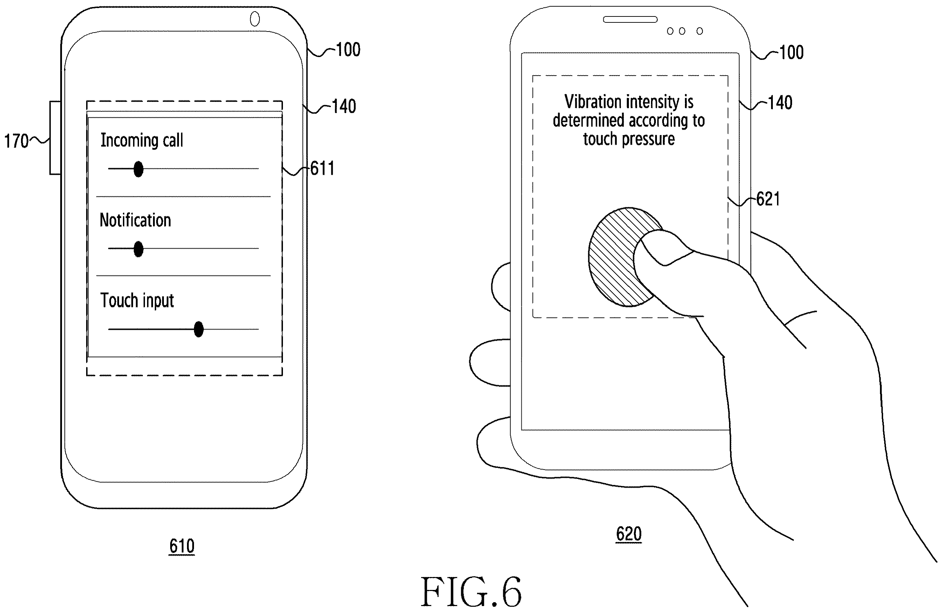

FIG. 6 illustrates a user interface (UI) related to configuring a vibration intensity output on a display of an electronic device according to an embodiment.

Referring to FIG. 6, according to an embodiment, a user interface such as a first screen 610 and a second screen 620 may be output on the display 140 of the electronic device 100.

In an embodiment, a first screen 610 may include a first visual object 611 that determines each vibration intensity according to the type of output event. According to an embodiment, the processor 110 may output a user interface including the first visual object 611 through the display 140 and obtain a user input. According to an embodiment, the user input to the first visual object 611 may be obtained using the physical key 170 included in the electronic device 100 or through the display 140.

For example, the first visual object 611 may include a bar icon for configuring a vibration intensity for an incoming call, a vibration intensity for a notification, and/or a vibration intensity for a touch input. However, the electronic device 100 is not limited thereto and may display various visual objects for configuring each vibration intensity according to the type of output event of a multimedia content.

According to an embodiment, the processor 110 may store information on a user input obtained with respect to the first visual object 611 in the memory 160. For example, the processor 110 may store, in the memory 160, at least one vibration intensity of each output event of at least one multimedia content.

In an embodiment, a second screen 620 may include a second visual object 621 that determines a vibration intensity according to the type of output event of at least one multimedia content. According to an embodiment, the processor 110 may output a user interface including the second visual object 621 through the display 140 and obtain a user input. According to an embodiment, the user input to the second visual object 621 may be obtained through the display 140.

According to an embodiment, the processor 110 may determine the vibration intensity, based on a user's touch input to the second screen 620. For example, the second visual object 621 may include the phrase "vibration intensity is determined according to touch pressure" and a visual object for assisting the user's touch input. However, the second visual object 621 is not limited thereto, and the second visual object 621 may include various visual objects for acquiring a touch input from the user.

According to an embodiment, the processor 110 may measure the pressure intensity of a user's touch input to the second visual object 621 through a pressure sensor included in the display 140. In an embodiment, the processor 110 may determine the vibration intensity, based on the pressure intensity. For example, the processor 110 may determine that the stronger the pressure intensity is, the stronger the output intensity of the vibration of the corresponding multimedia content has been configured. For another example, the processor 110 may determine that the weaker the pressure intensity is, the weaker the output intensity of the vibration of the corresponding multimedia content has been configured. According to an embodiment, the processor 110 may store the determined vibration intensity in the memory 160.

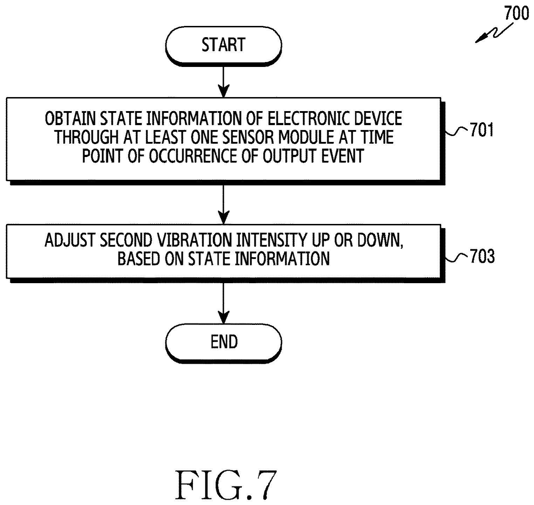

FIG. 7 is a flowchart 700 illustrating determining a second vibration intensity, based on state information according to an embodiment.

Referring to FIG. 7, in operation 701, the processor 110 according to an embodiment may obtain state information of the electronic device 100 through at least one sensor module 150 at a time point of occurrence of an output event. According to an embodiment, the processor 110 may obtain state information at a time point of occurrence of the output event, based on the output event of a multimedia content including audio data and first vibration data corresponding to the audio data. However, this approach is also applicable to other forms of output event. For example, the processor 110 may obtain, from at least one sensor module 150 at a time point of occurrence of an output event, state information including at least one of location information of the electronic device, information on an accessory connected to the electronic device, folding state information of the electronic device, or information related to whether the electronic device is worn on a part of the user's body.

According to an embodiment, in operation 703, the processor 110 may adjust the second vibration intensity up or down, based on the state information. For example, the processor 110 may reduce the second vibration intensity when the processor 110 determines that a vibration of the multimedia content needs to be output weak, based on the state information. For another example, the processor 110 may increase the second vibration intensity when the processor 110 determines that a vibration of the multimedia content needs to be output large, based on the state information. Accordingly, the processor 110 may adjust the vibration intensity in more stages, based on not only the first vibration intensity determined based on the user's configuration but also the second vibration intensity determined based on the state information.

According to an embodiment, the processor 110 may omit some of the above-described operations for configuring the second vibration intensity or may perform additional other operations.

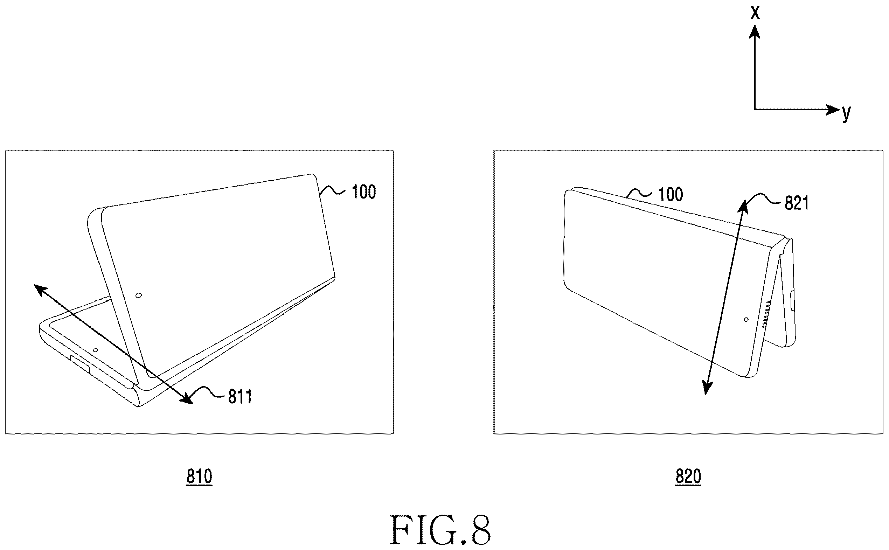

FIG. 8 illustrates determining a vibration intensity according to a vibration output direction and a mounting direction of an electronic device according to an embodiment.

Referring to FIG. 8, a first device state 810 and a second device state 820 are illustrated according to the mounting state of the electronic device 100. According to an embodiment, the processor 110 may distinguish the first state 810 and the second device state 820, based on folding state information of the electronic device 100 obtained from the sensor module 150.

According to an embodiment, the first state 810 may represent a case where the vibration direction 811 of the electronic device 100 is the y-axis direction and the mounting direction of the electronic device 100 is the y-axis direction. According to an embodiment, when the electronic device 100 is in the first state 810, the vibration output direction of the vibrator 120 may become horizontal to the mounting direction of the electronic device 100 and vibration noise may thus be offset when vibration is output. Therefore, the user may not be able to perceive the vibration even when the same vibration intensity is output by the vibrator 120.

According to an embodiment, when the processor 110 determines that the electronic device 100 is in the first state 810, based on state information obtained from the sensor module 150, the processor 110 may increase the second vibration intensity.

According to an embodiment, the second state 820 may represent a case where the vibration direction 821 of the electronic device 100 is the x-axis direction and the mounting direction of the electronic device 100 is the y-axis direction. According to an embodiment, when the electronic device 100 is in the second state 820, the vibration output direction of the vibrator 120 may become perpendicular to the mounting direction of the electronic device 100 and vibration noise may thus be amplified when vibration is output. Therefore, the user may perceive the vibration as stronger even when the same vibration intensity is output by the vibrator 120.

According to an embodiment, the processor 110 may reduce the second vibration intensity when the processor 110 determines that the electronic device 100 is in the second state 820, based on the state information obtained from the sensor module 150.

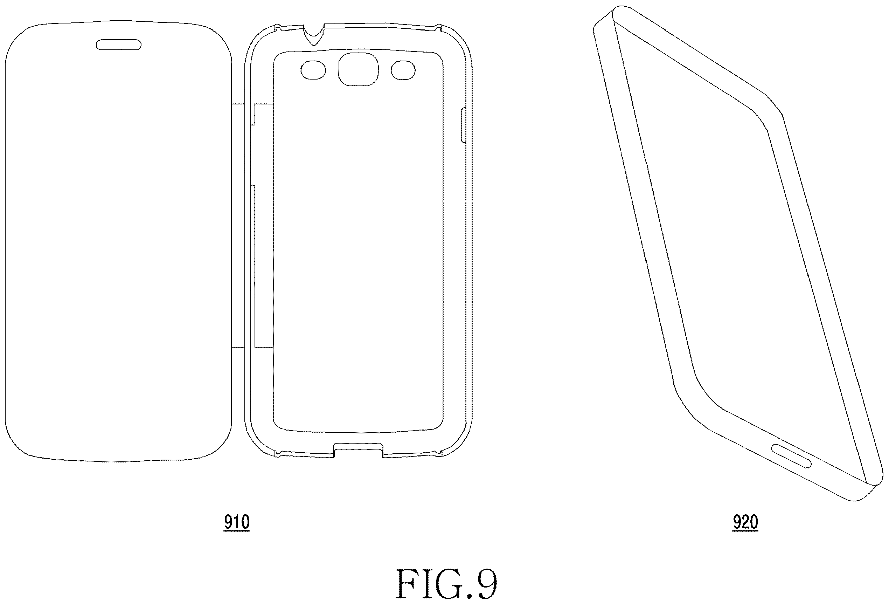

FIG. 9 illustrates determining a vibration intensity according to the type of an accessory connected to an electronic device according to an embodiment.

Referring to FIG. 9, a first accessory 910 and a second accessory 920 are illustrated among various accessory devices that may be worn on the electronic device 100. According to an embodiment, the processor 110 may obtain information on an accessory device connected to the electronic device 100 through the sensor module 150. According to an embodiment, the processor 110 may generate the second vibration intensity according to the type of accessory device.

According to an embodiment, the first accessory 910 is a case of the electronic device 100 and may indicate a cover device including a cover. According to an embodiment, the second accessory 920 is a case of the electronic device 100 and may indicate a classic cover device that does not include a cover.

According to an embodiment, the vibration intensity experienced by a user may be different depending on the type of case accessory connected to the electronic device 100. For example, when the electronic device 100 is connected to the second accessory 920 which is a classic cover device without a cover, the vibration intensity experienced by the user may be stronger than when the electronic device 100 is connected to the first accessory 910 with a cover. According to an embodiment, the processor 110 may generate the reduced second vibration intensity when the electronic device 100 is connected to the first accessory 910, compared to when the electronic device 100 is connected to the first accessory 910. According to various embodiments, the processor 110 is not limited to the above-described example, and may generate the second vibration intensity, based on the type of accessory device connected to the electronic device 100.

According to an embodiment, the processor 110 may generate the second vibration intensity according to the type of the electronic device 100. For example, when the electronic device 100 is a wearable device attached to a part of the user's body, the processor 110 may generate the second vibration intensity weaker than that when the electronic device 100 is a device which is not attached to a part of the user's body, even when the same multimedia content is output.

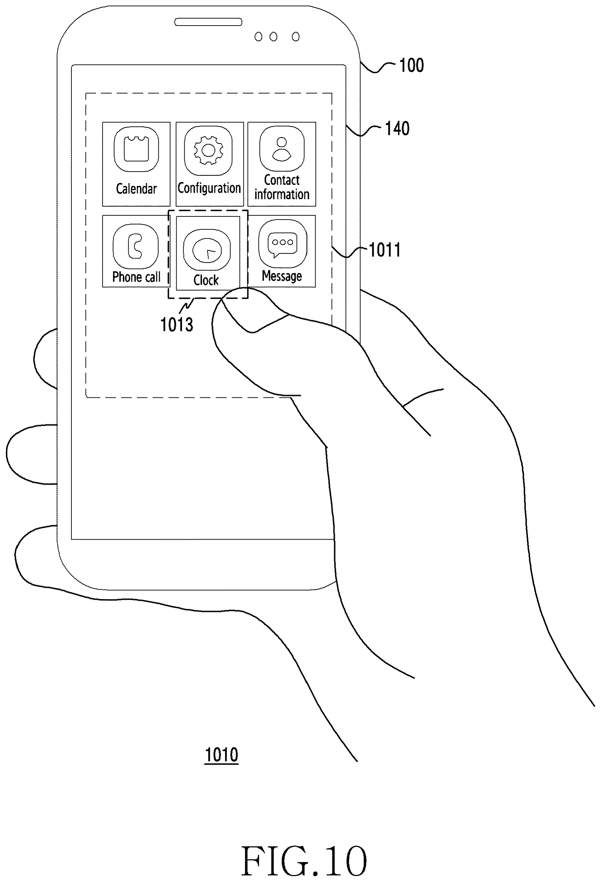

FIG. 10 illustrates determining a second vibration intensity, based on a touch input to at least one icon output on a display of an electronic device according to an embodiment.

Referring to FIG. 10, a third screen 1010 including a plurality of visual icons 1011 respectively corresponding to a plurality of applications is illustrated. According to an embodiment, the processor 110 may display a plurality of visual icons 1011 respectively corresponding to a plurality of applications through the display 140. According to an embodiment, the processor 110 may obtain touch inputs to the plurality of visual icons and execute corresponding applications, based on the touch inputs.

According to an embodiment, the processor 110 may perform a general function when the duration of a touch input to one of the plurality of visual icons is within a specified time. For example, the processor 110 may execute a watch application when the duration of a touch input to a clock icon 1013 is within a specified time.

According to an embodiment, the processor 110 may perform a function different from the general function when the duration of a touch input to one of the plurality of visual icons is longer than a specified time. For example, when the duration of a touch input to the clock icon 1013 is longer than a specified time, the processor 110 may provide a function of separately displaying the clock icon 1013 among the plurality of icons 1011. However, the processor 110 is not limited thereto and may provide various functions, based on the duration of the touch input.

According to an embodiment, the processor 110 may determine the second vibration intensity, based on the duration of a touch input to the plurality of visual icons 1011. For example, when the duration of a touch input to the clock icon 1013 among the plurality of visual icons 1011 is longer than a configured time, the processor 110 may generate the second vibration intensity having a larger magnitude.

As described above, an electronic device (e.g., the electronic device 100 in FIG. 1) according to an embodiment may include: a display (e.g., the display 140 in FIG. 1); a speaker (e.g., the speaker 130 in FIG. 1); a vibrator (e.g., the vibrator 120 in FIG. 1); and at least one processor (e.g., the processor 110 in FIG. 1) functionally connected to the display, the speaker, and the vibrator, wherein the at least one processor is configured to: obtain an output event of a multimedia content including audio data and first vibration data corresponding to the audio data; configure a first vibration intensity, based on a vibration intensity of the output event, configured by a user; obtain state information on the electronic device in response to the output event; generate a second vibration intensity, based on the state information and the output event; and while outputting the audio data through the speaker, output, through the vibrator, second vibration data obtained by correcting the vibration intensity of the first vibration data, based on the first vibration intensity and the second vibration intensity.

According to an embodiment, the electronic device may further include a memory (e.g., the memory 160 in FIG. 1), wherein the at least one processor is configured to: display a user interface related to configuring a vibration intensity of at least one multimedia content through the display; obtain a user input to the user interface; and store, in the memory, a vibration intensity of each of the at least one multimedia content, configured based on the user input.

According to an embodiment, the at least one processor may be configured to: obtain a user's touch input to the user interface; determine a vibration intensity of each of the at least one multimedia content, based on a duration of the touch input; and store the determined vibration intensity of each of the at least one multimedia content in the memory.

According to an embodiment, the state information may include state information related to the electronic device at a time point of occurrence of the output event.

According to an embodiment, the electronic device may further include at least one sensor module (e.g., the sensor module 150 in FIG. 1), wherein the state information includes at least one of location information of the electronic device acquired through the at least one sensor module, information on an accessory connected to the electronic device, folding state information of the electronic device, and information related to whether the electronic device is worn on a part of the user's body.

According to an embodiment, the at least one processor may be configured to generate the second vibration intensity, based on the state information, such that the second vibration data has a weaker vibration intensity or a stronger vibration intensity than the first vibration data.

According to an embodiment, the second vibration intensity may include a value obtained by correcting the first vibration intensity, based on the state information.

According to an embodiment, the at least one processor may be configured to generate mapping data by mapping the second vibration intensity to the first vibration data, and while outputting the audio data through the speaker, output, through the vibrator, third vibration data obtained by correcting a vibration intensity of the mapping data, based on the first vibration intensity.

According to an embodiment, the at least one processor may be configured to obtain a user's touch input to an icon displayed through the display, and generate the second vibration intensity, based on a duration of the touch input.

As described above, a method for operating an electronic device including a speaker (e.g., the speaker 130 in FIG. 1) and a vibrator (e.g., the vibrator 120 in FIG. 1) may include: obtaining an output event of a multimedia content including audio data and first vibration data corresponding to the audio data; obtaining state information on the electronic device in response to the output event; configuring a first vibration intensity, based on a vibration intensity of the output event, configured by a user; generating a second vibration intensity, based on the state information and the output event; and while the audio data is output through the speaker, outputting, through the vibrator, second vibration data obtained by correcting the vibration intensity of the first vibration data, based on the first vibration intensity and the second vibration intensity.

According to an embodiment, the configuring of the first vibration intensity may include: displaying a user interface related to configuring a vibration intensity of at least one multimedia content through the display included in the electronic device; obtaining a user input to the user interface; and configuring the first vibration intensity, based on a vibration intensity of each of the at least one multimedia content, configured based on the user input.

According to an embodiment, the obtaining of the user's input may include: obtaining a user's touch input to the user interface; and determining a vibration intensity of each of the at least one multimedia content, based on a duration of the touch input.

According to an embodiment, the obtaining of the state information may include obtaining, by using at least one sensor module included in the electronic device, the state information including at least one of location information of the electronic device, information on an accessory connected to the electronic device, folding state information of the electronic device, and information related to whether the electronic device is worn on a part of the user's body.

According to an embodiment, the outputting through the vibrator may include: generating mapping data by mapping the second vibration intensity to the first vibration data; and while the audio data is output through the speaker, outputting, through the vibrator, third vibration data obtained by correcting a vibration intensity of the mapping data, based on the first vibration intensity.

According to an embodiment, the generating of the second vibration intensity may include: obtaining a user's touch input to an icon displayed through the display; and generating the second vibration intensity, based on a duration of the touch input.

As described above, an electronic device (e.g., the electronic device 100 in FIG. 1) may include: a memory (e.g., the memory 160 in FIG. 1 ); a speaker (e.g., the speaker 130 in FIG. 1); a vibrator (e.g., the vibrator 120 in FIG. 1); and at least one processor (e.g., the processor 110 in FIG. 1) functionally connected to the memory, the speaker, and the vibrator, wherein the at least one processor is configured to: store, in the memory, vibration intensity information including at least one vibration intensity of each output event of at least one multimedia content; obtain an output event of a multimedia content including audio data and first vibration data corresponding to the audio data; determine, as a first vibration intensity, a vibration intensity corresponding to the output event among at least one vibration intensity included in the vibration intensity information; obtain state information on the electronic device in response to the output event; generate a second vibration intensity, based on the state information and the output event; and while outputting the audio data through the speaker, output, through the vibrator, second vibration data obtained by correcting the vibration intensity of the first vibration data, based on the first vibration intensity and the second vibration intensity.

According to an embodiment, the at least one processor may be configured to obtain an input for configuring the at least one vibration intensity of each output event of the at least one multimedia content from a user of the electronic device, and the vibration intensity information includes the obtained at least one vibration intensity.

The electronic device may further include a display, wherein the at least one processor is configured to: display a user interface related to obtaining the at least one vibration intensity through the display; obtain a user's touch input to the user interface; and determine the at least one vibration intensity of each output event of the at least one multimedia content, based on a duration of the touch input.

According to an embodiment, the at least one processor may be configured to: generate vibration data by mapping the second vibration intensity to the first vibration data; and while outputting the audio data through the speaker, output, through the vibrator, third vibration data obtained by correcting the vibration intensity of the mapping data, based on the first vibration intensity.

According to an embodiment, the electronic device may further include at least one sensor module, wherein the state information includes at least one of location information of the electronic device acquired through the at least one sensor module, information on an accessory connected to the electronic device, folding state information of the electronic device, and information related to whether the electronic device is worn on a part of the user's body.

As described above, an electronic device according to an embodiment may include a display, a speaker, a vibrator, and at least one processor functionally connected to the display, the speaker, and the vibrator. The at least one processor may be configured to obtain an output event comprising audio data and first vibration data corresponding to the audio data, configure a first vibration intensity, based on a vibration intensity associated with the output event, obtain state information on the electronic device in response to the output event, generate a second vibration intensity, based on the state information and the output event, and while outputting the audio data through the speaker, output, through the vibrator, second vibration data obtained by adjusting the vibration intensity of the first vibration data, based on the first vibration intensity and the second vibration intensity.

According to an embodiment, the electronic device may further include a memory. The at least one processor may be configured to display a user interface related to configuring a vibration intensity associated with at least one output event through the display, obtain a user input to the user interface, and store, in the memory, a vibration intensity associated with each of the at least one output event, configured based on the user input.

According to an embodiment, the at least one processor may be configured to obtain a user's touch input to the user interface, determine a vibration intensity associated with each of the at least one output event, based on a duration of the touch input, and store the determined vibration intensity associated with each of the at least one output event in the memory.

According to an embodiment, the state information may include state information related to the electronic device at a time point of occurrence of the output event.

According to an embodiment, the electronic device may further include at least one sensor module. The state information may include at least one of location information of the electronic device acquired through the at least one sensor module, information on an accessory connected to the electronic device, folding state information of the electronic device, and information related to whether the electronic device is worn on a part of a user's body.

According to an embodiment, the at least one processor may be configured to generate the second vibration intensity, based on the state information, such that the second vibration data has a weaker vibration intensity or a stronger vibration intensity than the first vibration data.

According to an embodiment, the second vibration intensity may include a value obtained by adjusting the first vibration intensity, based on the state information.

According to an embodiment, the at least one processor may be configured to generate mapping data by mapping the second vibration intensity to the first vibration data, and while outputting the audio data through the speaker, output, through the vibrator, third vibration data obtained by adjusting a vibration intensity of the mapping data, based on the first vibration intensity.

According to an embodiment, the at least one processor may be configured to obtain a user's touch input to an icon displayed through the display, and generate the second vibration intensity, based on a duration of the touch input.

As described above, a method for operating an electronic device including a speaker and a vibrator according to an embodiment may include obtaining an output event comprising audio data and first vibration data corresponding to the audio data, obtaining state information on the electronic device in response to the output event, configuring a first vibration intensity, based on a vibration intensity associated with the output event, generating a second vibration intensity, based on the state information and the output event, and while the audio data is output through the speaker, outputting, through the vibrator, second vibration data obtained by adjusting the vibration intensity of the first vibration data, based on the first vibration intensity and the second vibration intensity.

According to an embodiment, the configuring of the first vibration intensity may include displaying a user interface related to configuring a vibration intensity associated with at least one output event through a display included in the electronic device, obtaining a user input to the user interface, and configuring the first vibration intensity, based on a vibration intensity associated with each of the at least one output event, configured based on the user input.

According to an embodiment, the obtaining of the user's input may include obtaining a user's touch input to the user interface, and determining a vibration intensity associated with each of the at least one output event, based on a duration of the touch input.

According to an embodiment, the obtaining of the state information may include obtaining, by using at least one sensor module included in the electronic device, the state information comprising at least one of location information of the electronic device, information on an accessory connected to the electronic device, folding state information of the electronic device, and information related to whether the electronic device is worn on a part of the user's body.

According to an embodiment, the outputting through the vibrator may include generating mapping data by mapping the second vibration intensity to the first vibration data, and while the audio data is output through the speaker, outputting, through the vibrator, third vibration data obtained by adjusting a vibration intensity of the mapping data, based on the first vibration intensity.

According to an embodiment, the generating of the second vibration intensity may include obtaining a user's touch input to an icon displayed through a display included in the electronic device, and generating the second vibration intensity, based on a duration of the touch input.

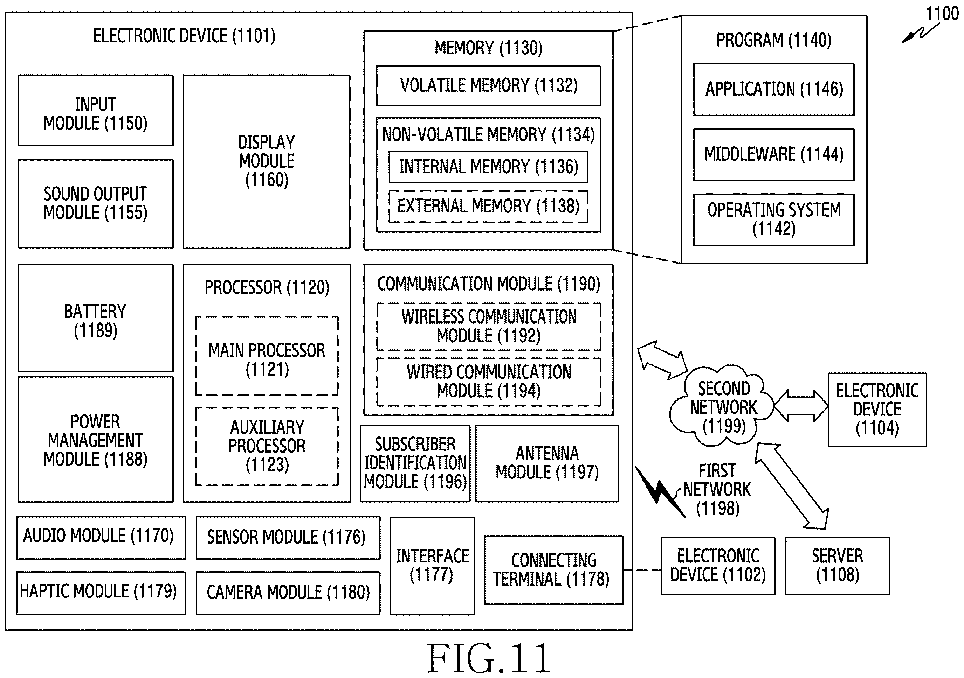

Fig. 11 is a block diagram illustrating an electronic device 1101 in a network environment 1100 according to various embodiments.

Referring to Fig. 11, the electronic device 1101 in the network environment 1100 may communicate with an electronic device 1102 via a first network 1198 (e.g., a short-range wireless communication network), or at least one of an electronic device 1104 or a server 1108 via a second network 1199 (e.g., a long-range wireless communication network). According to an embodiment, the electronic device 1101 may communicate with the electronic device 1104 via the server 1108. According to an embodiment, the electronic device 1101 may include a processor 1120, memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module(SIM) 1196, or an antenna module 1197. In some embodiments, at least one of the components (e.g., the connecting terminal 1178) may be omitted from the electronic device 1101, or one or more other components may be added in the electronic device 1101. In some embodiments, some of the components (e.g., the sensor module 1176, the camera module 1180, or the antenna module 1197) may be implemented as a single component (e.g., the display module 1160).

The processor 1120 may execute, for example, software (e.g., a program 1140) to control at least one other component (e.g., a hardware or software component) of the electronic device 1101 coupled with the processor 1120, and may perform various data processing or computation. According to one embodiment, as at least part of the data processing or computation, the processor 1120 may store a command or data received from another component (e.g., the sensor module 1176 or the communication module 1190) in volatile memory 1132, process the command or the data stored in the volatile memory 1132, and store resulting data in non-volatile memory 1134. According to an embodiment, the processor 1120 may include a main processor 1121 (e.g., a central processing unit (CPU) or an application processor (AP)), or an auxiliary processor 1123 (e.g., a graphics processing unit (GPU), a neural processing unit (NPU), an image signal processor (ISP), a sensor hub processor, or a communication processor (CP)) that is operable independently from, or in conjunction with, the main processor 1121. For example, when the electronic device 1101 includes the main processor 1121 and the auxiliary processor 1123, the auxiliary processor 1123 may be adapted to consume less power than the main processor 1121, or to be specific to a specified function. The auxiliary processor 1123 may be implemented as separate from, or as part of the main processor 1121.

The auxiliary processor 1123 may control at least some of functions or states related to at least one component (e.g., the display module 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active state (e.g., executing an application). According to an embodiment, the auxiliary processor 1123 (e.g., an image signal processor or a communication processor) may be implemented as part of another component (e.g., the camera module 1180 or the communication module 1190) functionally related to the auxiliary processor 1123. According to an embodiment, the auxiliary processor 1123 (e.g., the neural processing unit) may include a hardware structure specified for artificial intelligence model processing. An artificial intelligence model may be generated by machine learning. Such learning may be performed, e.g., by the electronic device 1101 where the artificial intelligence is performed or via a separate server (e.g., the server 1108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1130 may store various data used by at least one component (e.g., the processor 1120 or the sensor module 1176) of the electronic device 1101. The various data may include, for example, software (e.g., the program 1140) and input data or output data for a command related thereto. The memory 1130 may include the volatile memory 1132 or the non-volatile memory 1134.

The program 1140 may be stored in the memory 1130 as software, and may include, for example, an operating system (OS) 1142, middleware 1144, or an application 1146.

The input module 1150 may receive a command or data to be used by another component (e.g., the processor 1120) of the electronic device 1101, from the outside (e.g., a user) of the electronic device 1101. The input module 1150 may include, for example, a microphone, a mouse, a keyboard, a key (e.g., a button), or a digital pen (e.g., a stylus pen).

The sound output module 1155 may output sound signals to the outside of the electronic device 1101. The sound output module 1155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1160 may visually provide information to the outside (e.g., a user) of the electronic device 1101. The display module 1160 may include, for example, a display, a hologram device, or a projector and control circuitry to control a corresponding one of the display, hologram device, and projector. According to an embodiment, the display module 1160 may include a touch sensor adapted to detect a touch, or a pressure sensor adapted to measure the intensity of force incurred by the touch.

The audio module 1170 may convert a sound into an electrical signal and vice versa. According to an embodiment, the audio module 1170 may obtain the sound via the input module 1150, or output the sound via the sound output module 1155 or a headphone of an external electronic device (e.g., an electronic device 1102) directly (e.g., wiredly) or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. According to an embodiment, the sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device (e.g., the electronic device 1102) directly (e.g., wiredly) or wirelessly. According to an embodiment, the interface 1177 may include, for example, a high definition multimedia interface (HDMI), a universal serial bus (USB) interface, a secure digital (SD) card interface, or an audio interface.

A connecting terminal 1178 may include a connector via which the electronic device 1101 may be physically connected with the external electronic device (e.g., the electronic device 1102). According to an embodiment, the connecting terminal 1178 may include, for example, a HDMI connector, a USB connector, a SD card connector, or an audio connector (e.g., a headphone connector).

The haptic module 1179 may convert an electrical signal into a mechanical stimulus (e.g., a vibration or a movement) or electrical stimulus which may be recognized by a user via his tactile sensation or kinesthetic sensation. According to an embodiment, the haptic module 1179 may include, for example, a motor, a piezoelectric element, or an electric stimulator.

The camera module 1180 may capture a still image or moving images. According to an embodiment, the camera module 1180 may include one or more lenses, image sensors, image signal processors, or flashes.

The power management module 1188 may manage power supplied to the electronic device 1101. According to one embodiment, the power management module 1188 may be implemented as at least part of, for example, a power management integrated circuit (PMIC).

The battery 1189 may supply power to at least one component of the electronic device 1101. According to an embodiment, the battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the application processor (AP)) and supports a direct (e.g., wired) communication or a wireless communication. According to an embodiment, the communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device via the first network 1198 (e.g., a short-range communication network, such as Bluetooth^{™}, wireless-fidelity (Wi-Fi) direct, or infrared data association (IrDA)) or the second network 1199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1192 may identify and authenticate the electronic device 1101 in a communication network, such as the first network 1198 or the second network 1199, using subscriber information (e.g., international mobile subscriber identity (IMSI)) stored in the subscriber identification module 1196.

The wireless communication module 1192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1192 may support a high-frequency band (e.g., the mmWave band) to achieve, e.g., a high data transmission rate. The wireless communication module 1192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1192 may support various requirements specified in the electronic device 1101, an external electronic device (e.g., the electronic device 1104), or a network system (e.g., the second network 1199). According to an embodiment, the wireless communication module 1192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1197 may transmit or receive a signal or power to or from the outside (e.g., the external electronic device) of the electronic device 1101. According to an embodiment, the antenna module 1197 may include an antenna including a radiating element composed of a conductive material or a conductive pattern formed in or on a substrate (e.g., a printed circuit board (PCB)). According to an embodiment, the antenna module 1197 may include a plurality of antennas (e.g., array antennas). In such a case, at least one antenna appropriate for a communication scheme used in the communication network, such as the first network 1198 or the second network 1199, may be selected, for example, by the communication module 1190 (e.g., the wireless communication module 1192) from the plurality of antennas. The signal or the power may then be transmitted or received between the communication module 1190 and the external electronic device via the selected at least one antenna. According to an embodiment, another component (e.g., a radio frequency integrated circuit (RFIC)) other than the radiating element may be additionally formed as part of the antenna module 1197. According to various embodiments, the antenna module 1197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1101 and the external electronic device 1104 via the server 1108 coupled with the second network 1199. Each of the electronic devices 1102 or 1104 may be a device of a same type as, or a different type, from the electronic device 1101. According to an embodiment, all or some of operations to be executed at the electronic device 1101 may be executed at one or more of the external electronic devices 1102, 1104, or 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1101. The electronic device 1101 may provide the outcome, with or without further processing of the outcome, as at least part of a reply to the request. To that end, a cloud computing, distributed computing, mobile edge computing (MEC), or client-server computing technology may be used, for example. The electronic device 1101 may provide ultra low-latency services using, e.g., distributed computing or mobile edge computing. In another embodiment, the external electronic device 1104 may include an internet-of-things (IoT) device. The server 1108 may be an intelligent server using machine learning and/or a neural network. According to an embodiment, the external electronic device 1104 or the server 1108 may be included in the second network 1199. The electronic device 1101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1140) including one or more instructions that are stored in a storage medium (e.g., internal memory 1136 or external memory 1138) that is readable by a machine (e.g., the electronic device 1101). For example, a processor (e.g., the processor 1120) of the machine (e.g., the electronic device 1101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
a speaker;
a vibrator; and
at least one processor functionally connected to the display, the speaker, and the vibrator,
wherein the at least one processor is configured to:
obtain an output event comprising audio data and first vibration data corresponding to the audio data;
configure a first vibration intensity, based on a vibration intensity associated with the output event;
obtain state information on the electronic device in response to the output event;
generate a second vibration intensity, based on the state information and the output event; and
while outputting the audio data through the speaker, output, through the vibrator, second vibration data obtained by adjusting the vibration intensity of the first vibration data, based on the first vibration intensity and the second vibration intensity.

2. The electronic device of claim 1, further comprising a memory,
wherein the at least one processor is configured to:
display a user interface related to configuring a vibration intensity associated with at least one output event through the display;
obtain a user input to the user interface; and
store, in the memory, a vibration intensity associated with each of the at least one output event, configured based on the user input.

3. The electronic device of claim 2, wherein the at least one processor is configured to:
obtain a user's touch input to the user interface;
determine a vibration intensity associated with each of the at least one output event, based on a duration of the touch input; and
store the determined vibration intensity associated with each of the at least one output event in the memory.

4. The electronic device of claim 1, wherein the state information comprises state information related to the electronic device at a time point of occurrence of the output event.

5. The electronic device of claim 1, further comprising at least one sensor module,
wherein the state information comprises at least one of location information of the electronic device acquired through the at least one sensor module, information on an accessory connected to the electronic device, folding state information of the electronic device, and information related to whether the electronic device is worn on a part of a user's body.

6. The electronic device of claim 5, wherein the at least one processor is configured to generate the second vibration intensity, based on the state information, such that the second vibration data has a weaker vibration intensity or a stronger vibration intensity than the first vibration data.

7. The electronic device of claim 5, wherein the second vibration intensity comprises a value obtained by adjusting the first vibration intensity, based on the state information.

8. The electronic device of claim 1, wherein the at least one processor is configured to:
generate mapping data by mapping the second vibration intensity to the first vibration data; and
while outputting the audio data through the speaker, output, through the vibrator, third vibration data obtained by adjusting a vibration intensity of the mapping data, based on the first vibration intensity.

9. The electronic device of claim 1, wherein the at least one processor is configured to:
obtain a user's touch input to an icon displayed through the display; and
generate the second vibration intensity, based on a duration of the touch input.

10. A method for operating an electronic device comprising a speaker and a vibrator, the method comprising:
obtaining an output event comprising audio data and first vibration data corresponding to the audio data;
obtaining state information on the electronic device in response to the output event;
configuring a first vibration intensity, based on a vibration intensity associated with the output event;
generating a second vibration intensity, based on the state information and the output event; and
while the audio data is output through the speaker, outputting, through the vibrator, second vibration data obtained by adjusting the vibration intensity of the first vibration data, based on the first vibration intensity and the second vibration intensity.

11. The method of claim 10, wherein the configuring of the first vibration intensity comprises:
displaying a user interface related to configuring a vibration intensity associated with at least one output event through a display included in the electronic device;
obtaining a user input to the user interface; and
configuring the first vibration intensity, based on a vibration intensity associated with each of the at least one output event, configured based on the user input.

12. The method of claim 11, wherein the obtaining of the user's input comprises:
obtaining a user's touch input to the user interface; and
determining a vibration intensity associated with each of the at least one output event, based on a duration of the touch input.

13. The method of claim 10, wherein the obtaining of the state information comprises obtaining, by using at least one sensor module included in the electronic device, the state information comprising at least one of location information of the electronic device, information on an accessory connected to the electronic device, folding state information of the electronic device, and information related to whether the electronic device is worn on a part of the user's body.

14. The method of claim 10, wherein the outputting through the vibrator comprises:
generating mapping data by mapping the second vibration intensity to the first vibration data; and
while the audio data is output through the speaker, outputting, through the vibrator, third vibration data obtained by adjusting a vibration intensity of the mapping data, based on the first vibration intensity.

15. The method of claim 10, wherein the generating of the second vibration intensity comprises:
obtaining a user's touch input to an icon displayed through a display included in the electronic device; and
generating the second vibration intensity, based on a duration of the touch input.
